# EUROPEAN PATENT APPLICATION

(11) **EP 2 253 875 A2**
(43) Date of publication of application: **24.11.2010**
(21) Application number: 09710112.5
(22) Date of filing: 11.02.2009
(51) Int. Cl.: F16L 33/02

(54) **HOSE JOINT CLAMP**

(30) Priority: 15.02.2008 KR 20080014178
(71) Applicant: AN Kook Industry Co.,ltd, Gyeonggi-do 445-933 (KR)
(72) Inventor: AN, Byung Moo, Uljin-gun Gyeongbuk 767-801 (KR)
(74) Representative: Betten & Resch
(86) International application number: PCT/KR2009/000624
(87) International publication number: WO 2009/102137

(57) **Abstract**

Disclosed herein is a hose fastening clamp used to hold hoses that are connected by various pipe connectors in such a way as to be butted to each other, in addition to maintaining airtightness. The hose fastening clamp prevents an outer covering of a hose that is in contact with a band from being pushed in the rotating direction of the band, and increases a clamping force using the band fastened to the hose. The hose fastening clamp includes a band having on its outer surface a thread and forming an open ring that surrounds a hose. A fastening screw engages with the thread to adjust the diameter of the open ring. A clamping member is placed to be in contact with the inner surface of the band. The diameter of the clamping member is changed in conjunction with a change in diameter of the open ring.

## Description

### [Technical Field]

The present invention relates, in general, to a hose fastening clamp which is used to hold hoses that are connected by various pipe connectors in such a way as to be butted to each other, in addition to maintaining airtightness and, more particularly, to a hose fastening clamp, which prevents an outer covering of a hose that is in contact with a band from being pushed in the rotating direction of the band, and increases a clamping force using the band fastened to the hose.

### [Background Art]

Hoses which have been used in a variety of fields are manufactured to have various shapes with various materials according to the quality of the material, the thermal treatment method, the purpose of use, and the place of installation. Since the hoses are inexpensive and convenient to install, the use of hoses is gradually increasing.

The hose is bent or curved according to the place where it is to be installed, and is butted to an adjacent hose. A fastening clamp is provided on a joint of neighboring hoses so as to prevent objects flowing into the hoses from leaking out and to increase a coupling force between the neighboring hoses.

A conventional fastening clamp includes a clamping band unit having threads which are formed on a surface thereof at regular intervals, and a fastening screw unit which is rotated to adjust the length of the clamping band unit. Thus, as the fastening screw unit rotates, the length of the clamping band unit is adjusted, so that the joint of the hoses is compressed.

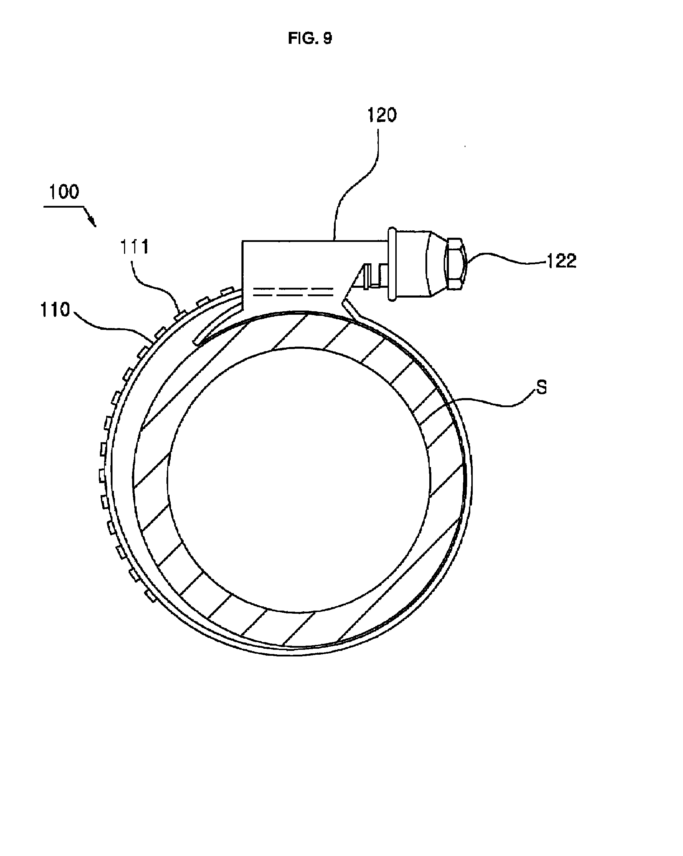

Referring to FIG. 9, the conventional fastening clamp 100 includes a clamping band unit 110 and a fastening screw unit 120. The clamping band unit 110 has the shape of a plate, with threads 111 formed on a surface thereof at regular intervals. The fastening screw unit 120 engages with the threads 111 which are formed on the clamping band unit 110 in a threaded manner, and is provided with a screwhead 122 to rotate the fastening screw unit.

When the screwhead 122 rotates to a desired degree, the fastening screw unit 120 rotates, thus moving the threads 111 forwards or backwards. Thereby, the clamping band unit 110 compresses the hose S.

Such a conventional fastening clamp has no problem when objects in the hose flow at a lower speed and under a lower pressure. However, the fastening clamp is problematic in that it may be easily loosened by the expansion of the hose when the flow rate and pressure of the objects are high. The fastening clamp compressing the joint between neighboring hoses is loosened, thus frequently resulting in the leakage of objects from the hoses.

In the conventional fastening clamp, the clamping band unit is fastened while being advanced by the fastening screw unit which rotates around a position at which the clamping band unit is inserted into the fastening screw unit. As the distance from the clamping band unit entering the fastening screw unit to the hose increases, the thickness of the outer covering changes considerably.

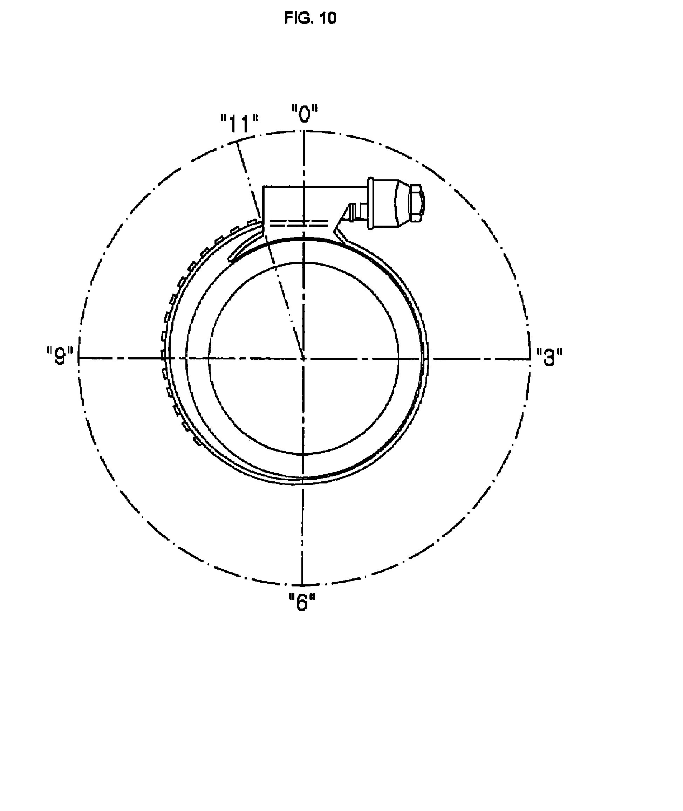

This will be described in detail with reference to FIG. 10. When the clamping band unit is coupled to the hose, assuming that a position which is right above the central portion of the hose to be vertical thereto and is in close contact with the clamping band unit is designated as a reference position "0", positions when viewed clockwise from the reference point are designated as "3", "6", and "9", and a position at which the clamping band unit is inserted into the fastening screw unit is designated as "11", the outer covering of the hose has the following thicknesses at respective positions. The position "0" is farthest from the position "11" at which the clamping band unit is inserted into the fastening screw unit, when viewed in a rotating direction, a counterclockwise direction. Thus, at this position, the outer covering of the hose is thickest. Since the position "3" is distant from the inserted position "11" in the inserting direction, the outer covering of the hose is formed to be thin. Meanwhile, since the position "9" is near the inserted position "11" in the inserting direction, the outer covering of the hose at the position "9" is thicker than that at the position "3".

That is, as the distance from a position where the clamping band unit is inserted into the fastening screw unit in the inserting direction increases, the thickness of the outer covering is reduced. The nearer the distance is, the thicker the outer covering is.

Such a conventional fastening clamp is problematic in that it is impossible to perform a clamping operation in the state where the thickness of the outer covering of the hose is kept constant, so that a clamping force is gradually reduced because the outer covering of the hose is restored to its original state when a lengthy period of time has passed after the fastening operation was performed, and thus the fastening clamp may become dismantled. Moreover, if the clamping operation is forcibly performed with an excessively large force, the outer covering of the hose may be damaged.

In order to solve the problem, Korean U.M. Registration No. 20-0187887 which was published on July 15, 2000 and is entitled "Connection Band For Hose" (hereinafter referred to as prior art 1) has been proposed.

According to prior art 1, the connection band includes a body having a pair of plates. Bent parts are provided on both sides of the body. A locking pin having a hole and a locking pin having a screw hole are inserted into the corresponding bent parts, so that a bolt is inserted into the hole to be fastened to an associated screw hole. Further, an auxiliary clamping pipe is mounted to the inner surface of the body, and is compressed by the body which is controlled by tightening the bolt, thus clamping the circumference of a hose.

The prior art 1 is problematic in that it is complicated to mount the auxiliary clamping pipe to the inner surface of the body, skilled workers must find a precise mounting position so as to increase a clamping force generated when the auxiliary clamping pipe clamps the circumference of the hose by the compressing force transmitted from the body, and such an operation is not easy. Further, when the circumference of the hose is made of an elastic material, it expands outwards and thus pushes the auxiliary clamping pipe, and the auxiliary clamping pipe pushed to a predetermined position moves upwards or downwards to be removed from the body of the band.

### [Disclosure]

### [Technical Problem]

Accordingly, the present invention has been made keeping in mind the above problems occurring in the prior art, and an object of the present invention is to provide a hose fastening clamp, which compresses the outer covering of a hose, thus increasing a clamping force, preventing the outer covering from being damaged when the hose is clamped, and retaining a clamping force even when a lengthy period of time has passed after the hose was clamped.

Another object of the present invention is to provide a hose fastening clamp, which is capable of preventing the outer covering of a hose from being pushed in a band fastening direction.

A further object of the present invention is to provide a hose fastening clamp, which may be easily coupled to a hose, thus allowing general consumers as well as skilled workers to easily use the hose fastening clamp, therefore affording improved convenience.

Yet another object of the present invention is to provide a hose fastening clamp, which has a simple construction and enables the ease of manufacture, so that manufacturing costs are reduced, an additional maintenance cost incurred by a hose fastening operation is reduced, and thus the hose fastening clamp is economical.

### [Technical Solution]

In order to accomplish the above objects, the present invention provides a hose fastening clamp including a band which has on an outer surface thereof a thread and forms an open ring that surrounds a hose, a fastening screw which engages with the thread to adjust a diameter of the open ring, and a clamping member which is placed to be in contact with an inner surface of the band, a diameter of the clamping member being changed in conjunction with a change in diameter of the open ring.

Further, the clamping member may include a body, and a coupling unit which protrudes outwards from a predetermined portion of the body and is coupled to the band.

The coupling unit may comprise a first coupling unit, the first coupling unit including an insertion hole into which the band is inserted, and a locking part which is bent to an outer surface of the inserted band and is thus locked.

The coupling unit may comprise a second coupling unit, the second coupling unit including a slotted part which has a slot having a predetermined length and receiving each of right and left edges of the band.

Further, the coupling unit may be formed on either or both of opposite ends of the clamping member.

### [Advantageous Effects]

According to the present invention, a hose fastening clamp is advantageous in that a high clamping force can be obtained without damaging an outer covering of a hose when neighboring hoses are connected to each other, and a clamping force is continuously retained even when a lengthy period of time has passed after the fastening operation was performed so that watertightness and airtightness are maintained, thus reducing maintenance costs, and objects flowing in the hose are not exposed to the outside, thus preventing an unexpected accident.

Further, a hose fastening clamp is advantageous in that it has a simple construction, so that skilled workers or common consumers may easily use the hose fastening clamp.

Furthermore, a hose fastening clamp is advantageous in that it is convenient to manufacture, so that manufacturing costs can be reduced and thus the hose fastening clamp is economical.

### [Description of Drawings]

FIG. 1 is a perspective view illustrating a hose fastening clamp according to the present invention;
FIG. 2 is a view illustrating the state before a band is fastened to a fastening screw;
FIG. 3 is a view illustrating the state in which the band is fastened to the fastening screw;
FIGS. 4, 5, 6, and 7 are perspective views illustrating embodiments of a clamping member;
FIG. 8 is a schematic view illustrating the use of the present invention;
FIG. 9 is a front view illustrating a conventional clamp; and
FIG. 10 is a schematic view illustrating the use of the conventional clamp.

### < Description of reference characters of important parts >

- 1:: clamp S: hose Sa: outer covering
- Sp:: overlapping portion J: clamping direction
- C:: open ring
- 10:: band 11: inner surface 12: outer surface
- 13:: fastening screw unit 14: end 15: right and left edges
- 20:: fastening screw 21: corresponding threads 22: screwhead
- 30:: clamping member 31: body 32: coupling unit
- 33:: first coupling unit
- 33a:: insertion hole 33b: locking part
- 34:: second coupling unit 35: slotted part 35a: slot

### [Best Mode]

Hereinafter the hose fastening clamp according to the preferred embodiment of the present invention will be described with reference to the accompanying drawings.

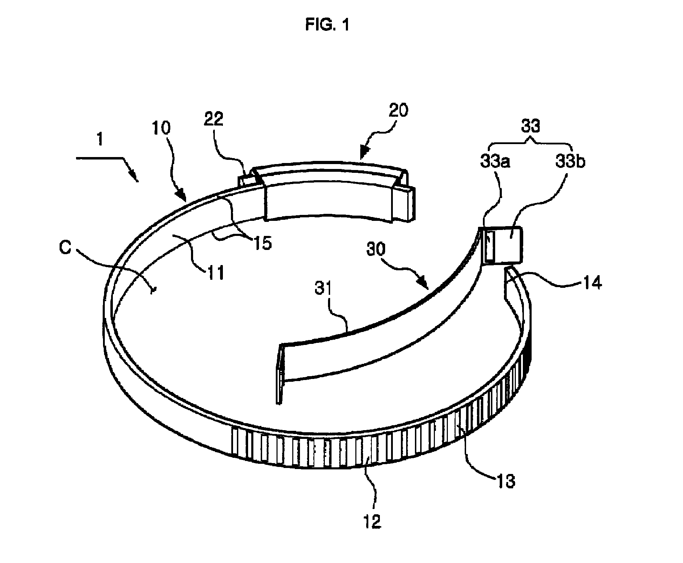

When describing the hose fastening clamp according to the present invention, the reference of direction will be specified with reference to FIG. 1.

In the state in which a band is inserted into a fastening screw and thus an open ring is formed in a predetermined size, a threaded side formed on the band is designated as an outer side or an outer surface, and an open ring side formed by the band is designated as an inner side or inner surface.

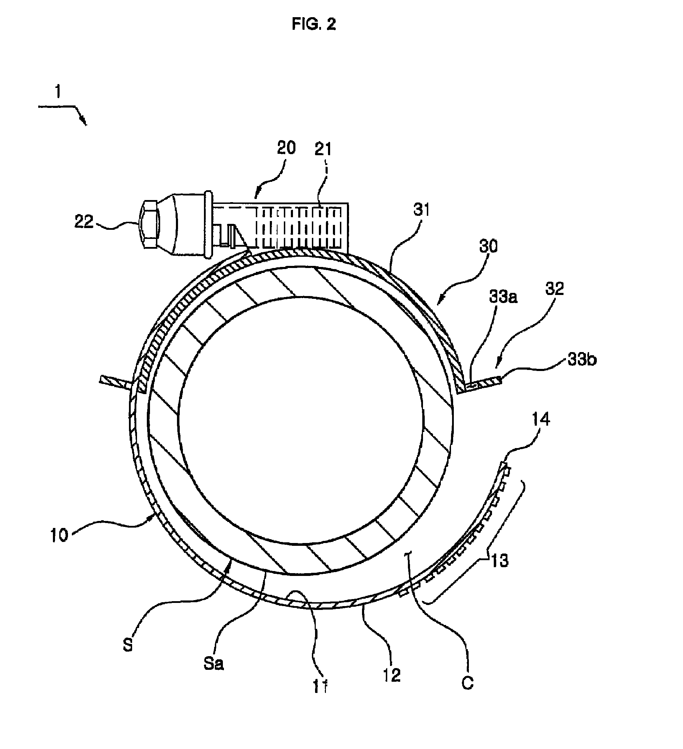

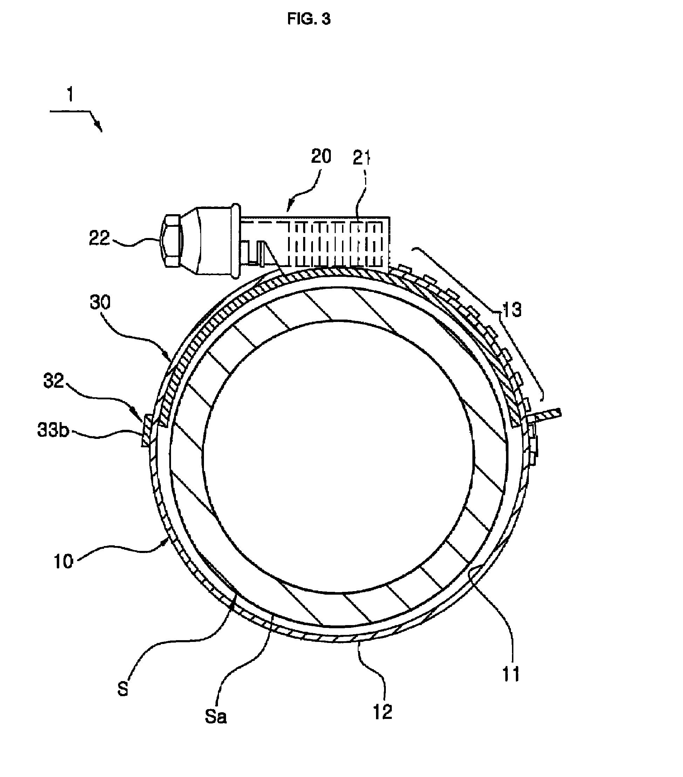

As shown in FIG. 1 or 2 and 3, the hose fastening clamp 1 according to the present invention includes a band 10, a fastening screw 20, and a clamping member 30. The band 10 has on its outer surface 12 threads 13, and forms an open ring C which surrounds a hose S. The fastening screw 20 is provided at a predetermined position on the band 10, has on its inner surface corresponding threads 21 which are in contact with the threads 13, with a screwhead 22 provided on the fastening screw 20 to rotate it. The clamping member 30 is placed to be in contact with the inner surface 11 of the band 10, and the diameter of the clamping member is changed in conjunction with a change in diameter of the open ring C which is adjusted by rotating the fastening screw 20.

The band 10 may have various strengths according to the material, thermal treatment method, and interval between the threads 13, and may be made of Teflon, PVC, silicone, steel, and a metal material such as aluminum.

The threads 13 are formed on the outer surface 12 of the band 10 at regular intervals, and engage with the corresponding threads 21 formed on the fastening screw 20 in a threaded manner, so that the threads 13 move forwards or backwards by rotating the fastening screw 20, and thus the diameter of the open ring C defined by the band 10 is adjusted.

The fastening screw 20 into which the band 10 is inserted has on its inner surface the threads 21 which correspond to the threads 13 formed on the band 10, and includes the screwhead 22 to rotate the threads. The fastening screw is integrally secured to a predetermined position on the band 10.

Here, a cross-shaped or hexagonal groove is formed in the screwhead 22 of the fastening screw 20, so that the fastening screw 20 is rotated using a Phillips screwdriver or a hexagonal wrench to be easily tightened or loosened.

That is, if the fastening screw 20 is rotated in one direction, the diameter of the open ring C defined by the band 10 over which the fastening screw is fitted is adjusted to be small, so that the inner surface 11 of the band 10 is in close contact with the hose S. In contrast, if the fastening screw 20 is rotated in an opposite direction, the diameter of the open ring C is increased, so that the band is released from the hose S.

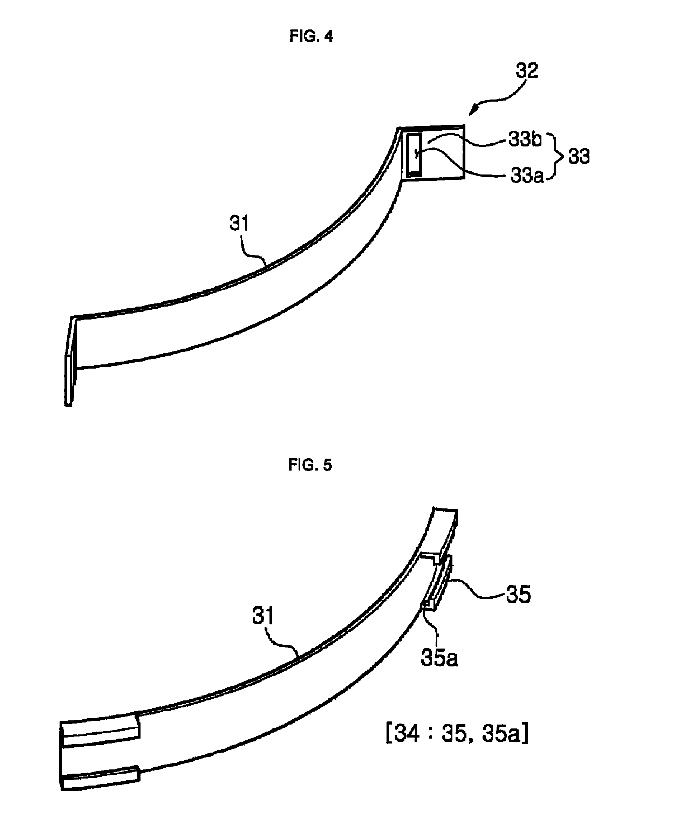

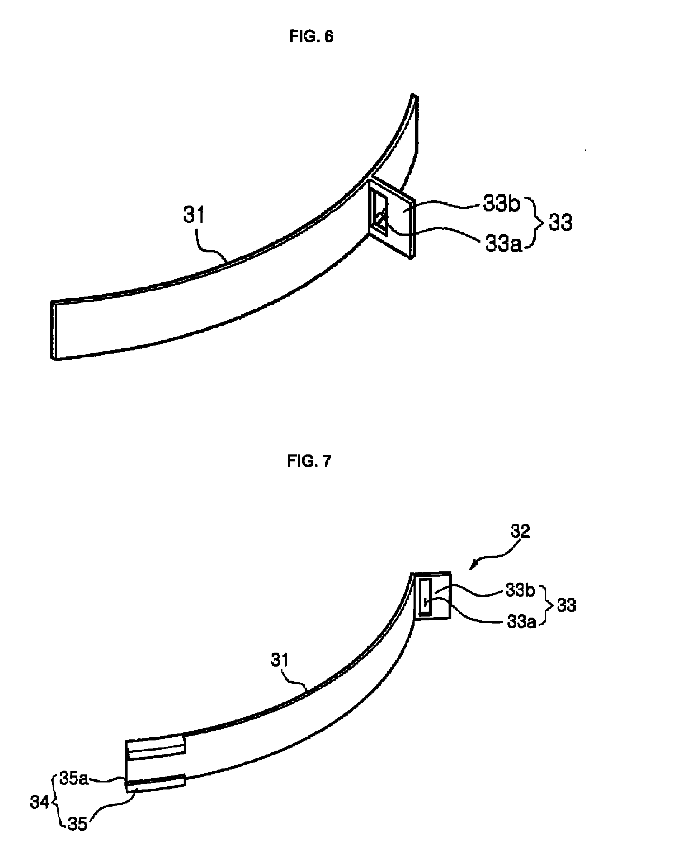

The clamping member 30 which is placed to be in contact with the inner surface 11 of the band 10 will be described with reference to FIGS. 4 to 7. The clamping member includes a body 31 and a coupling unit 32 which is provided to protrude outwards from a predetermined position on the body 31.

The body 31 has the shape of a plate of a predetermined length, and is in close contact with or released from the outer covering Sa of the hose S in conjunction with a change in diameter of the open ring C defined by the band 10. The coupling unit 32 provided at a predetermined position on the body 31 is locked to the band 10, thus holding the body 31 at a predetermined position.

To this end, the coupling unit 32 may comprise a first coupling unit 33 including an insertion hole 33a into which the band 10 is inserted, and a locking part 33b which is bent outwards relative to the inserted band 10 to be locked.

The first coupling unit 33 may be formed on either or both of the opposite ends or a predetermined position of the body 31.

Further, the coupling unit 32 may comprise a second coupling unit 34 including a slotted part 35. The slotted part has slots 35a of a predetermined length to receive the right and left edges 15 of the band 10. The slotted part 35 is compressed towards the band 10, so that the slotted part 35 is secured to the right and left edges 15 of the band 10.

The first or second coupling unit 33 or 34 may be provided on either or both of the opposite ends or a predetermined position of the body 31. Both the first and coupling units 33 and 34 may be used together.

Moreover, each of the first and second coupling units 33 and 34 protrudes outwards from the body 31, and has the insertion hole 33a or the slots 35a into which the band 10 is inserted. If necessary, a plurality of first or second coupling units may be provided at predetermined positions on the body 31.

The sequence in which the clamping member 30 having on the opposite ends of the body 31 the first coupling units 33 is coupled to the band 10 will be described. First, after the end 14 of the band 10 is inserted into the insertion hole 33a of the first coupling unit 33 provided on one end of the clamping member, it is rotated to be located at predetermined position. The first coupling unit 33 provided on the other end is located at a position corresponding to the end 14 of the band 10 so that the band 10 surrounding the hose S is inserted into the first coupling unit. After the band 10 surrounds the hose S, the end 14 is inserted into the insertion hole 33a of the first coupling unit 33 which is provided on the other end of the clamping member, and the band 10 firmly holds the hose S. In this case, the locking parts 33b of the first coupling units 33 provided on the opposite ends of the clamping member are bent to be in close contact with the outer covering Sa of the band 10 and are locked.

Further, the clamping member 30 may be rotated to a desired position while it is coupled to the band 10. Thus, the clamping member compresses the overlapping portion Sp of the outer covering Sa of the hose S during the fastening operation, thus preventing the outer covering Sa from being damaged.

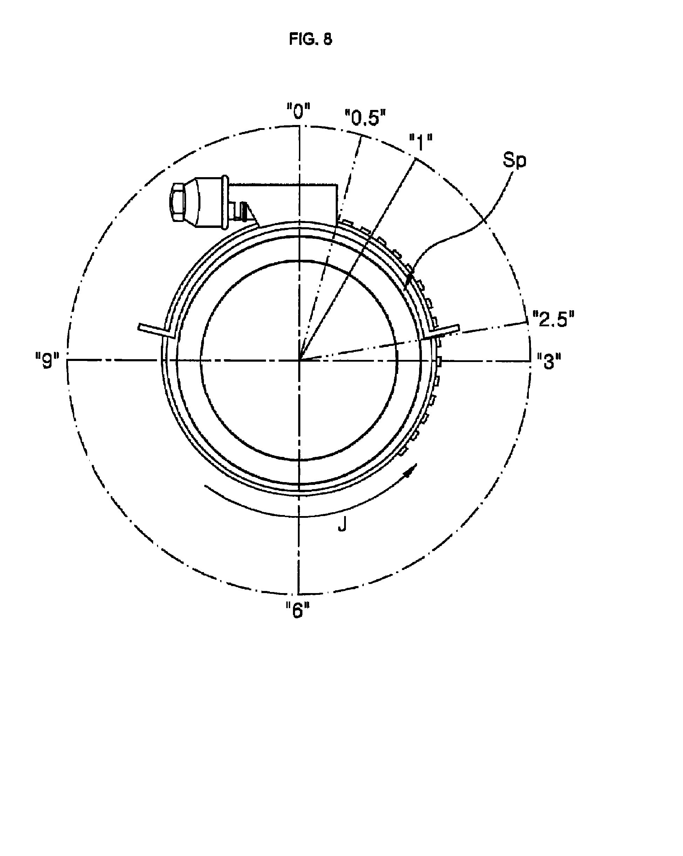

This will be described in detail with reference to FIG. 8. The outer covering Sa of the hose S has different thicknesses depending on the clamping direction J of the band 10 which is in close contact with the hose. At positions "9" to "6" distant from position "0.5" at which the end 14 of the band 10 is inserted into the fastening screw 20, the outer covering Sa is pushed towards the fastening screw 20, so that it becomes thinner. At positions "1" to "3" near to the inserted position "0.5", the outer covering Sa maintains a constant thickness without change. Consequently, a portion of the outer covering Sa pushed from the distant positions "9" to "6" overlaps a portion of the outer covering which is placed at the near positions "1" to "3".

At this time, the clamping member 30 is rotated to be located at the overlapping portion Sp of the outer covering Sa. Thereby, when the band 10 clamps the hose, the clamping member 30 compresses the outer covering Sa to press the overlapping portion Sp of the outer covering Sa, so that the outer covering Sa is restored to its original state. Further, a portion of the outer covering Sa located at the distant positions "9" to "6" is compressed, thus preventing the outer covering Sa from being moved in the clamping direction J.

Preferably, the clamping member 30 has elasticity so that its diameter is changed in conjunction with a change in diameter of the open ring C defined by the band 10 and thus the clamping member is in close contact with the outer covering Sa of the hose S.

The use of the hose fastening clamp according to the present invention will be described below.

First, the end 14 of the band 10 is inserted into the insertion hole 33a of the first coupling unit 33 which is provided on one end of the clamping member 30 so that the clamping member 30 is placed on the inner surface of the band 10. The clamping member 30 coupled to the band in this way is rotated to be located at a predetermined position on the inner surface 11 of the band 10.

Next, the band 10 is placed on the outer covering Sa of the hose S such that the band 10 surrounds the hose S. The end 14 of the band 10 is inserted into the insertion hole 33a of the first coupling unit 33 which is formed on the other end of the clamping member 30, and thereafter is inserted into the fastening screw 20.

At this time, the band is inserted to a predetermined length such that the threads 13 provided on the outer surface 12 of the band 10 engage with the corresponding threads 21 provided in the fastening screw 20.

The screwhead 22 of the fastening screw 20 is rotated in the coupling direction to reduce the diameter of the open ring C defined by the band 10, so that the inner surface 11 of the band 10 is in close contact with the outer covering Sa of the hose S, and thus the hose is clamped.

The clamping member 30 placed on the inner surface 11 of the band 10 comes into close contact with the outer covering Sa of the hose S, thus preventing the outer covering Sa of the hose S from being pushed in the moving direction of the band 10.

Further, in order to prevent the outer covering Sa of the hose S from overlapping at a position, the clamping member 30 is rotated to be located at the overlapping portion of the outer covering Sa before the clamping member 30 is secured to the band 10. In this state, if the clamping member 30 is secured to the band 10, the overlapping portion of the outer covering Sa is restored to its original state by the compressing force of the clamping member 30.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A hose fastening clamp, comprising:
a band having on an outer surface thereof a thread, and forming an open ring that surrounds a hose;
a fastening screw engaging with the thread to adjust a diameter of the open ring; and
a clamping member placed to be in contact with an inner surface of the band, a diameter of the clamping member being changed in conjunction with a change in diameter of the open ring.

2. The hose fastening clamp according to claim 1, wherein the clamping member comprises:
a body; and
a coupling unit protruding outwards from a predetermined portion of the body, and coupled to the band.

3. The hose fastening clamp according to claim 2, wherein the coupling unit comprises a first coupling unit, the first coupling unit including an insertion hole into which the band is inserted, and a locking part which is bent to an outer surface of the inserted band and is thus locked.

4. The hose fastening clamp according to claim 2, wherein the coupling unit comprises a second coupling unit, the second coupling unit including a slotted part which has a slot having a predetermined length and receiving each of right and left edges of the band.

5. The hose fastening clamp according to claim 3 or 4, wherein the coupling unit is formed on either or both of opposite ends of the clamping member.
